# EUROPÄISCHE PATENTSCHRIFT

(11) **EP 1 603 729 B1**
(45) Veröffentlichungstag und Bekanntmachung des Hinweises auf die Patenterteilung: **03.08.2011**
(21) Anmeldenummer: 04712558.8
(22) Anmeldetag: 19.02.2004
(51) Int. Cl.: B29C 45/28, B29C 45/27

(54) **NADELVERSCHLUSSDÜSE**
NEEDLE VALVE NOZZLE
BUSE DE VANNE POINTEAU

(30) Priorität: 20.02.2003 DE 20302845 U
(43) Veröffentlichungstag der Anmeldung: 14.12.2005
(73) Patentinhaber: Günther Heisskanaltechnik GmbH, 35066 Frankenberg (DE)
(72) Erfinder: GÜNTHER, Herbert, 35108 Allendorf (DE)
(74) Vertreter: Buchhold, Jürgen
(86) Internationale Anmeldenummer: PCT/EP2004/001607
(87) Internationale Veröffentlichungsnummer: WO 2004/073954

(56) Entgegenhaltungen:
- EP-A- 0 638 407
- EP-A- 0 873 841
- DE-A- 3 245 571
- US-A- 4 286 941
- US-A- 5 090 890
- PATENT ABSTRACTS OF JAPAN vol. 1995, no. 10, 30. November 1995 (1995-11-30) -& JP 07 186203 A (MITSUBISHI MATERIALS CORP), 25. Juli 1995 (1995-07-25)
- PATENT ABSTRACTS OF JAPAN vol. 1996, no. 08, 30. August 1996 (1996-08-30) -& JP 08 090598 A (FUJI SEIKI KK), 9. April 1996 (1996-04-09)

## Beschreibung

Die Erfindung betrifft eine Nadelverschlußdüse für ein Spritzgießwerkzeug gemäß dem Oberbegriff von Anspruch 1.

Nadelverschlußdüsen werden in Spritzgießwerkzeugen eingesetzt, um eine fließfähige Schmelze bei einer vorgebbaren Temperatur unter hohem Druck einem trennbaren Werkzeugblock (Formeinsatz) zuzuführen. Die meist pneumatisch oder hydraulisch angetriebenen Verschlußnadeln dienen dazu, Austrittsöffnungen für die Schmelze periodisch zu öffnen und zu schließen, beispielsweise wenn ein Kunststoffmaterial segmentiert eingespritzt werden muß (Kaskadenanguß).

Jede Verschlußnadel ist im werkzeugseitigen Bereich der Nadelverschlußdüse axialverschieblich gelagert und im düsenseitigen Bereich mittig durch einen Schmelzekanal hindurchgeführt (siehe beispielsweise DE 32 49 486 C3 oder DE 34 03 603 A1). Der Schmelzekanal endet gewöhnlich in einem Düsenmundstück, das endseitig die Austrittsöffnung für die Schmelze bildet. In Schließstellung greift das untere Ende der im Querschnitt meist zylindrischen Verschlußnadel in einen ebenfalls zylindrischen Dichtsitz ein, der im Düsenmundstück oder im Formeinsatz ausgebildet ist.

Um die Schmelze innerhalb des temperierten Schmelzekanals bis an den Formeinsatz heran auf einer gleichmäßigen Temperatur halten zu können, besteht das Düsenmundstück gewöhnlich aus einem hoch wärmeleitenden Material. Es wird von unten direkt in den Düsenkörper der Nadelverschlußdüse eingeschraubt oder - wie DE 197 17 381 A1 vorsieht - mittels einer äußeren Schraub-Hülse aus einem gering wärmeleitenden Material gesichert. Das äußere Ende der Schraub-Hülse greift in einen passenden zylindrischen Sitz im Formeinsatz ein, so daß die Austrittsöffnung gegenüber dem Dichtsitz zentriert wird. Ein schmaler Luftspalt zwischen dem hochwärmeleitenden Düsenmundstück und dem Formeinsatz sorgt für die erforderliche thermische Trennung zwischen Nadelverschlußdüse und Werkzeug.

Weil außerordentlich hohe Drücke von z.B. weit über 1.000 bar wirken, ist eine präzise Abdichtung in der Schließstellung ebenso notwendig wie eine exakte Nadelführung. Hierzu weist das Düsenmundstück oberhalb der Austrittsöffnung einen Einlaufkonus für die Verschlußnadel auf, damit diese beim Schließen zentrisch in den Dichtsitz einfahren kann. Problematisch hierbei ist allerdings, daß die Verschlußnadeln mit ihren Dichtkanten stets an dem Einlaufkonus im Düsenmundstück anschlagen, was zu Beschädigungen und auf Dauer zu Undichtigkeiten führen kann. Für eine präzise Abdichtung sind enge Toleranzgrenzen einzuhalten, insbesondere bei langen Düsen und tiefen Bohrungen, so daß der Fertigungs- und Reparaturaufwand entsprechend hoch ist.

Um dem zu begegnen, ist in DE 32 45 571 C2 die Verschlußnadel an ihrem unteren Ende mehrstufig ausgebildet, und zwar derart, daß vor dem eigentlichen Verschlußteil der Nadel eine im Durchmesser vergrößerte Anlaufkante ausgebildet ist. Die axiale Länge des bevorzugt zylindrischen Verschlußteils, d.h. der axiale Abstand zwischen der vorderen Dichtkante des Verschlußteils und der Anlaufkante ist dabei so gewählt, daß der Winkel einer Verbindungslinie von der Dichtkante zur Anlaufkante durch auf parallelen Durchmessern liegenden Verbindungspunkten größer ist als der Konuswinkel des Einlauftrichters in dem Düsenmundstück, jeweils bezogen auf die Längsachse des Schmelzekanals. Das Düsenmundstück dient mithin als Vorzentrierkörper für die Verschlußnadel, denn sobald diese während des Schließvorgangs aus ihrer zentrischen Lage ausgelenkt wird, gelangt stets nur die Anlaufkante an dem Einlaufkonus zur Anlage, während die empfindliche Dichtkante des Verschlußteils berührungsfrei in das Düsenmundstück eingeführt wird.

Zur Verbesserung der Lebensdauer schlägt DE 32 45 571 C2 weiter vor, das Düsenmundstück aus einem verschleißfesten Werkstoff zu fertigen. Derartige Materialien sind jedoch schlecht wärmeleitend, was sich ungünstig auf die Temperaturverteilung in dem nicht beheizbaren Düsenmundstück auswirkt.

Gleiches schlägt DE 41 09 122 C1 vor, wonach jedoch das verschleißfeste Düsenmundstück nicht in den Düsenkörper eingeschraubt, sondern mittels eines Spannrings axial angepreßt wird. Dieser umgreift hierbei das Mundstück und wird mit dem Düsenkörper verschraubt. Von Nachteil ist ferner, daß die Verschlußnadel seitlich in den Schmelzekanal eindringt, was konstruktiv aufwendig ist. Zudem schließt der Verschlußteil der Nadel nicht bündig mit dem Düsenmundstück ab, was zu unsauberen Angußpunkten führt. Eine weitere Nadelverschlußdüse ist inder EP0638 407 offenbart.

Ziel der Erfindung ist es, diese und weitere Nachteile des Standes der Technik zu überwinden und eine verbesserte Nadelverschlußdüse zu schaffen, die mit einfachen Mitteln kostengünstig aufgebaut ist und eine dauerhaft präzise Nadelführung und -abdichtung gewährleistet. Eine Beeinträchtigung der Temperaturverteilung ist hierbei ebenso zu vermeiden wie Beschädigungen am Verschlußteil der Verschlußnadeln und/oder dem Düsenmundstück.

Hauptmerkmale der Erfindung sind im kennzeichnenden Teil von Anspruch 1 angegeben. Der Oberbegriff des Anspruchs 1 geht von des EP 0638 407 aus. Ausgestaltungen sind Gegenstand der Ansprüche 2 bis 14.

Bei einer Nadelverschlußdüse für ein Spritzgießwerkzeug zum Herstellen von Spritzgießartikeln, mit einem Düsenkörper, in dem wenigstens ein Schmelzekanal für eine Schmelze ausgebildet ist, der an oder in einem Düsenmundstück endet und mit einer von wenigstens einem Formeinsatz gebildeten Formkavität des Spritzgießwerkzeugs strömungsverbunden ist, und mit einer Verschlußnadel, die den Schmelzekanal und das Düsenmundstück längsverschieblich durchsetzt und von einer Öffnungs- in eine Schließstellung bringbar ist, wobei die Verschlußnadel an ihrem unteren Ende einen Verschlußteil hat oder bildet, der in Schließstellung in einen Dichtsitz eingreift, und wobei zur Zentrierung der Verschlußnadel vor dem Dichtsitz wenigstens ein Einlaufkonus vorgesehen ist, besteht das Düsenmundstück aus einem hoch wärmeleitfähigen Material und setzt den Schmelzekanal im wesentlichen zylindrisch fort, wobei der bzw. jeder Einlaufkonus für die Verschlußnadel in einem Zentrierkörper aus verschleißfestem Material ausgebildet ist, der an und/oder in dem Düsenmundstück formschlüssig gehaltert ist und mit einem eine Austrittsöffnung für die Schmelze bildenden Endabschnitt mit dem Formeinsatz in Eingriff bringbar ist.

Das Düsenmundstück aus hoch wärmeleitfähigem Material sorgt für eine gute Temperaturverteilung bis in den Angußbereich hinein und ist aufgrund seiner einfachen Geometrie rationell herstellbar. Es kann insbesondere von der Angußseite aus präzise bearbeitet werden, was sich günstig auf die Herstellkosten auswirkt. Der Zentrierkörper wird separat mit hoher Genauigkeit gefertigt. Er läßt die Verschlußnadel stets zentrisch in den Dichtsitz einlaufen, wobei das verschleißfeste Material eine dauerhafte Nadelführung und -abdichtung gewährleistet. Sollten dennoch Undichtigkeiten auftreten oder der Zentrierkörper abgenutzt sein, kann dieser rasch und bequem ausgewechselt werden, ohne daß die Nadelverschlußdüse oder das Düsenmundstück demontiert werden müssen. Die Verwendung einer größeren oder kleineren Verschlußnadel ist ebenso problemlos möglich, weil jederzeit ein anderer Zentrierkörper mit einer passenden Auslaßöffnung in das Düsenmundstück einsetzbar ist. Ein weiterer Vorteil der erfindungsgemäßen Lösung besteht darin, daß der Zentrierkörper die erforderliche thermische Trennung zwischen der Nadelverschlußdüse und dem Formeinsatz herstellt. Zusätzliche Isolations- oder Trennelemente sind daher nicht erforderlich.

Der Zentrierkörper ist konzentrisch zur Längsachse der Nadelverschlußdüse ausgebildet und stützt sich stirnseitig an dem Düsenmundstück ab. Er schließt mithin unmittelbar an dieses an und verlängert die Düse in Richtung Formnest, wobei die Verschlußnadel stets konzentrisch zur Längsachse in den Dichtsitz eingeführt wird.

Der Zentrierkörper weist einen zylindrischen Halsabschnitt auf, in dessen Bereich der Einlaufkonus für die Verschlußnadel ausgebildet ist. Wird der Zentrierkörper mit diesem Halsabschnitt in das Düsenmundstück eingeführt, so ist eine zuverlässige Führung gewährleistet. Der Zentrierkörper sitzt längsverschieblich in dem Düsenmundstück. Die Verschlußnadel kann nicht mehr mit dem hoch wärmeleitenden Material der Düse in Berührung kommen. Beschädigungen am Düsenmundstück werden wirksam vermieden. Die Nadelverschlußdüse weist eine insgesamt hohe Standzeit auf.

Um die Nadelverschlußdüse gegenüber dem Formnest auszurichten, greift der Zentrierkörper nach Anspruch 2 mit seinem Endabschnitt in einen zylindrischen oder konischen Sitz im Formeinsatz ein, wobei Anspruch 3 vorsieht, daß der Endabschnitt längsverschieblich in den Sitz (54) eingreift. Der Zentriersitz liegt bevorzugt konzentrisch zur Angußöffnung, d.h. die Schmelze kann ungehindert und strömungsgünstig in das Formnest einfließen. Gleichzeitig ist eine stets zuverlässige Abdichtung des Zentrierkörpers im Formeinsatz gewährleistet.

Verschiedene Varianten gehen aus Anspruch 4 und 5 hervor, wenn nämlich der Dichtsitz für den Verschlußteil der Verschlußnadel in dem Formeinsatz oder im Endabschnitt des Zentrierkörpers ausgebildet ist. Anspruch 6 sieht überdies vor, daß der Zentrierkörper mit seinem Endabschnitt einen Teil der Formkavität begrenzt.

Gemäß der Weiterbildung von Anspruch 7 ist die Verschlußnadel zum Verschlußteil hin verjüngt ausgebildet, was sich zum einen günstig auf die Strömungsverhältnisse innerhalb des Schmelzekanals auswirkt und zum anderen die Nadelführung begünstigt. Dazu trägt auch Anspruch 8 bei, indem der Übergang von dem im Durchmesser größeren Nadelabschnitt zu dem im Durchmesser kleineren Verschlußteil konisch und/oder gerundet verläuft.

Eine weitere wichtige Ausgestaltung der Erfindung geht aus Anspruch 9 hervor, Danach ist zwischen dem im Durchmesser größeren Nadelabschnitt und dem Verschlußteil eine Anlaufkante ausgebildet, deren Durchmesser größer ist als der Durchmesser der endseitigen Dichtkante des Verschlußteils der Verschlußnadel, wobei der axiale Abstand zwischen der Dichtkante des Verschlußteils und der Anlaufkante laut Anspruch 10 so gewählt ist, daß der Winkel einer Verbindungslinie von der Dichtkante zur Anlaufkante durch auf parallelen Durchmessern liegenden Verbindungspunkten größer ist als der Winkel des Einlaufkonus in dem Zentrierkörper, jeweils bezogen auf die Längsachse der Nadelverschlußdüse. Dadurch ist sichergestellt, daß die relativ empfindliche Dichtkante der Verschlußnadel beim Eintauchen in den Zentrierkörper nicht mehr an diesem anschlagen kann. Der Verschlußteil der Nadel bleibt vielmehr berührungsfrei. Die Standzeit der Nadelverschlußdüse wird weiter erhöht.

Anspruch 11 sieht überdies vor, daß die Differenz zwischen dem Winkel der Verbindungslinie von der Dichtkante zur Anlaufkante und dem Winkel des Einlaufkonus größer ist als der größtmöglich erreichbare Auslenkwinkel der Verschlußnadel zur Längsachse der Nadelverschlußdüse bevor die Verschlußnadel mit der Anlaufkante an die Innenwandung des Zentrierkörpers anstößt. Die Dichtkante der Verschlußnadel kann mithin den Zentrierkörper nicht berühren. Dies wird von der Anlaufkante wirksam verhindert, die gemäß Anspruch 12 gerundet sein kann. Auf diese Weise kann die Verschlußnadel reibungsarm in den Zentrierkörper hineingleiten.

Damit sich während des Schließvorgangs innerhalb der Schmelze kein unerwünschter Gegendruck aufbauen kann, ist der Einlaufkonus nach Anspruch 13 von Rippen, Axialstegen o.dgl. gebildet, welche die Verschlußnadel konzentrisch gleitbar umschließen. Die beim Eintreten der Verschlußnadel in die Austrittsöffnung bzw. den Dichtsitz zwangsläufig verdrängte Schmelze kann ohne weiteres in den Schmelzekanal ausweichen, d.h. die beim Schließvorgang entstehende Materialverdichtung bzw. Druckerhöhung wird automatisch ausgeglichen. Alternativ kann die Verschlußnadel gemäß Anspruch 14 seitliche Auswölbungen, Abflachungen, Vertiefungen o.dgl. aufweisen, was ebenfalls zur Druckentlastung führt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine vergrößerte Axialschnittansicht des unteren Endes einer Nadelverschluß- düse und
- Fig. 2: eine vergrößerte Axialschnittansicht des unteren Endes einer anderen Aus- führungsform einer Nadelverschlußdüse.

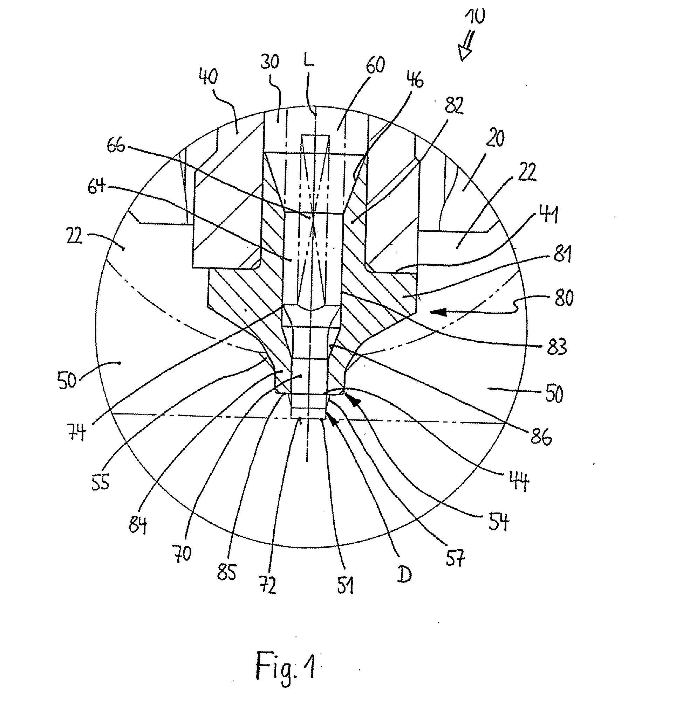

Die in Fig. 1 allgemein mit 10 bezeichnete Nadelverschlußdüse ist Bestandteil eines (nicht weiter dargestellten) Spritzgießwerkzeugs. Sie hat einen bevorzugt außenbeheizten Düsenkörper 20, in dem ein (nicht sichtbares) Materialrohr ausgebildet ist, das konzentrisch zur Längsachse L der Nadelverschlußdüse 10 einen Schmelzekanal 30 begrenzt. In den Düsenkörper 20 ist von unten ein Düsenmundstück 40 aus einem hoch wärmeleitfähigen Material eingesetzt, vorzugsweise eingeschraubt, welches den Schmelzekanal 30 ohne Querschnittsänderung zylindrisch nach unten fortsetzt.

Über den Schmelzekanal 30 wird eine zu verarbeitende Schmelze, beispielsweise eine Metall-, Silikon- oder Kunststoffschmelze, einem (nicht näher gezeigten) Formnest zugeführt. Dieses ist zwischen wenigstens zwei Formeinsätzen 50 ausgebildet, die an einer (nicht dargestellten) Werkzeugplatte befestigt sind und konzentrisch zur Längsachse L der Heißkanaldüse 10 eine Angußöffnung 51 begrenzen.

Zwischen dem Düsenmundstück 40 und den Formeinsätzen 50 ist ein Zentrierkörper 80 aus einem verschleißfesten Material angeordnet, der die Nadelverschlußdüse 10 gegenüber der Angußöffnung 51 zentriert und gemeinsam mit einer das Düsenmundstück 40 und den Düsenkörper 20 umgebenden Luftkammer 22 eine thermische Trennung zwischen der Nadelverschlußdüse 10 und den Formeinsätzen 50 bildet, d.h. die fließfähige Schmelze wird durch das hoch wärmeleitfähige Düsenmundstück 40 bis an das Formnest heran auf einer konstant hohen Temperatur gehalten. Gleichzeitig verhindert der Zentrierkörper 80, daß sich die gekühlten Formeinsätze 50 erwärmen.

Wie Fig. 1 zeigt, hat der insgesamt rotationssymmetrisch zur Längsachse L ausgebildete Zentrierkörper 80 einen breiten Flanschrand 81 sowie einen schmalen zylindrischen Halsabschnitt 82. Dieser ist von unten in den Schmelzekanal 30 bzw. in das Düsenmundstück 40 eingesetzt und längsverschieblich darin geführt.

An seinem dem Formnest zugewandten Ende bildet der Zentrierkörper 80 einen zylindrischen Endabschnitt 84, der längsverschieblich in einen zylindrischen Sitz 54 eingreift. Dieser von den Formeinsätzen 50 geformte Zentriersitz 54 liegt konzentrisch zur Angußöffnung 51 und kann in einem oberen Abschnitt 55 leicht konisch ausgebildet sein, um den Zentrierkörper 80 mit seinem Endabschnitt 84 bei der Montage leichter einführen zu können. Dessen Außendurchmesser ist so bemessen, daß eine druckdichte Verbindung entsteht und die Schmelze nicht in die Luftkammer 22 gelangen kann. Gleichzeitig ist eine Längsbewegung des Zentrierkörpers 80 in dem Sitz 54 möglich, um gegebenenfalls thermisch bedingte Längenänderungen der Nadelverschlußdüse 10 ausgleichen zu können. Die Stirnfläche 85 des Endabschnitts 84 ist bevorzugt flach ausgebildet, ebenso wie die (nicht näher bezeichnete) Bodenfläche des Zentriersitzes 54, so daß eine exakte Passung gegeben ist.

Man erkennt, daß der Schmelzekanal 30 durch den Zentrierkörper 80 hindurch fortgesetzt wird, dessen Endabschnitt 84 eine Austrittsöffnung 44 für die Schmelze bildet. Letztere kann aufgrund der zentrischen Ausrichtung der Heißkanaldüse 10 durch die Angußöffnung 51 hindurch ungehindert in das Formnest einfließen.

Zum Öffnen und Schließen der Austrittsöffnung 44 ist eine axial verschiebbare Verschlußnadel 60 vorgesehen, die den Schmelzekanal 30 längsverschieblich durchsetzt und mittels eines (nicht dargestellten) pneumatischen Antriebs von einer Öffnungsstellung in eine Schließstellung gebracht werden kann. Die zumindest abschnittsweise zylindrisch ausgebildete und entlang der Längsachse L im Durchmesser mehrfach abgestufte Verschlußnadel 60 weist endseitig einen Verschlußteil 70 auf, der in Schließstellung durch den Endabschnitt 84 des Zentrierkörpers 80 hindurch in einen zylindrischen Dichtsitz D eingreift. Dieser ist im Ausführungsbeispiel der Fig. 1 vor der Angußöffnung 51 in den Formeinsätzen 50 eingebracht und in seinem oberen Bereich 57 konisch ausgebildet, damit der Verschlußteil 70 - unterstützt von der sich dort ansammelnden Schmelze - reibungsarm in den Dichtsitz D einfahren kann.

Die Übergänge von den im Durchmesser größeren Nadelabschnitten zu den im Durchmesser kleineren Abschnitten können konisch oder gerundet verlaufen, wobei zwischen einem Nadelabschnitt 64 und dem daran anschließenden Verschlußteil 70 eine Anlaufkante 74 ausgebildet ist, deren Durchmesser größer ist als der Durchmesser der endseitigen Dichtkante 72 des Verschlußteils 70 der Verschlußnadel 60.

Die Anlaufkante 74 dient dazu, die Verschlußnadel 60 im Falle einer Auslenkung aus ihrer konzentrischen Lage im Schmelzekanal 30 mit Hilfe des Zentrierkörpers 80 zu zentrieren, damit der empfindliche Verschlußteil 70 nicht beschädigt und die Austrittsöffnung 44 stets druckdicht verschlossen wird. Hierzu ist im Halsabschnitt 82 des Zentrierkörpers 80 ein Einlaufkonus 46 vorgesehen, der konzentrisch zur Längsachse L in einen zylindrischen Führungsabschnitt 83 übergeht, dessen Innendurchmesser geringfügig größer ist als der Außendurchmesser des Nadelabschnitts 64 der Verschlußnadel 60. Ein vor der Austrittsöffnung 44 ausgebildeter Konus 86 im Zentrierkörper 80 reduziert den Innendurchmesser des Führungsabschnitts 83 auf den Durchmesser des Verschlußteils 70 der Verschlußnadel 60.

Fährt diese von der Öffnungsstellung in ihre Schließstellung wird sie von der Anlaufkante 74 und dem Einlaufkonus 46 automatisch konzentrisch zur Längsachse L ausgerichtet, wobei der Nadelabschnitt 64 in dem Führungsabschnitt 83 des Zentrierkörpers 80 lagestabil weitergeführt wird, bis der Verschlußteil 70 in den Dichtsitz D eingebracht ist. Die empfindliche Dichtkante 72 der Verschlußnadel 60 kann weder an dem Düsenmundstück 40 noch an dem Zentrierkörper 80 anschlagen. Sie wird mithin nicht mehr beschädigt. Die Berührung der Anlaufkante 74 mit dem Einlaufkonus 46 ist unproblematisch, da die bevorzugt leicht abgerundete Anlaufkante 74 der Verschlußnadel 60 relativ unempfindlich ist und der Zentrierkörper 80 aus verschleißfestem Material besteht.

Damit sich während des Schließvorgangs der Verschlußnadel 60 kein unerwünschter Gegendruck innerhalb der Schmelze aufbaut, ist der Einlaufkonus 46 in dem Zentrierkörper 80 von (nicht näher dargestellten) Rippen, Axialstegen o.dgl. gebildet, welche die Verschlußnadel 60 konzentrisch gleitbar umschließen. Ergänzend oder alternativ kann man die Verschlußnadel 60 im Bereich des Nadelabschnitts 64 seitlich mit Auswölbungen oder Vertiefungen 66 versehen, so daß die von der Verschlußnadel 60 verdrängte Schmelze ungehindert in den Schmelzekanal 30 zurückströmen kann.

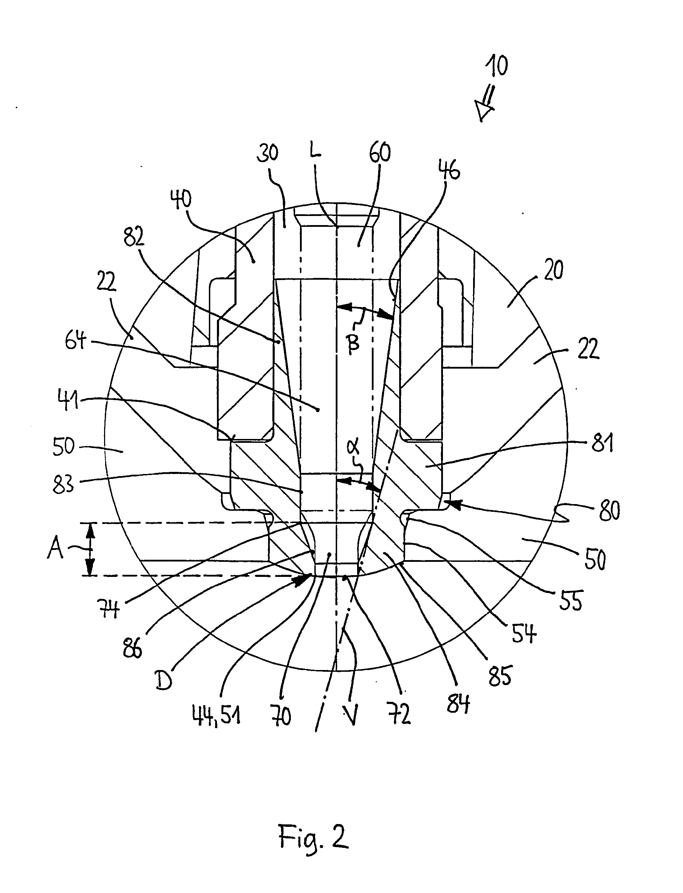

In der Ausführungsform von Fig. 2 begrenzt der Zentrierkörper 80 mit seinem stirnseitig konvex gewölbten Endabschnitt 84 einen Teil der Formkavität. Der Zentriersitz 54 für den Zentrierkörper 80 wird weiterhin von den Formeinsätzen 50 gebildet, während der Dichtsitz D für den Verschlußteil 70 der Verschlußnadel 60 im Endabschnitt 84 des Zentrierkörpers 80 liegt. Die Austrittsöffnung 44 und die Angußöffnung 51 fallen zusammen, d.h. die Schmelze gelangt unmittelbar durch den Zentrierkörper 80 hindurch in das Formnest.

Man erkennt in Fig. 2, daß der Zentrierkörper 80 sowohl im Düsenmundstück 40 als auch im Sitz 54 der Formeinsätze 50 längsbeweglich geführt ist, wobei zwischen dem Flanschrand 81 und der Stirnfläche 41 des Düsenmundstücks 40 gegebenenfalls ein schmaler Bewegungsspalt entstehen kann. Hierdurch wird sichergestellt, daß sich die Nadelverschlußdüse 10 beim Erwärmen in ihrer Länge verändern kann, ohne daß sich die Formnestgrenze verändert.

Wichtig ist, daß der axiale Abstand A zwischen der Dichtkante 72 des Verschlußteils 70 und der Anlaufkante 74 so gewählt ist, daß der Winkel α einer Verbindungslinie V von der Dichtkante 72 zur Anlaufkante 74 durch auf parallelen Durchmessern liegenden Verbindungspunkten größer ist als der Öffnungswinkel β des Einlaufkonus 46 im Halsabschnitt 82 des Zentrierkörpers 80; jeweils bezogen auf die Längsachse L der Heißkanaldüse 10. Dadurch wird die Verschlußnadel 60 mit Ihrer Anlaufkante 74 stets an der Schräge 46 eingefangen und durch den Führungsabschnitt 83 derart hindurch geführt, daß der Verschlußteil 70 berührungsfrei in den Dichtsitz D eintauchen kann. Beschädigungen an der Dichtkante 72 sind nahezu ausgeschlossen.

Die Erfindung ist nicht auf eine der vorbeschriebenen Ausführungsformen beschränkt, sondern in vielfältiger Weise abwandelbar. So ist der Zentrierkörper 80 bevorzugt aus einem pulver-metallurgischen Material gefertigt. Denkbar sind jedoch auch andere Materialien, die eine hohe Verschleißfestigkeit aufweisen. Der Flanschrand 81 des Zentrierkörpers 80 kann - je nach Ausführungsform - das untere Ende des Düsenmundstücks 40 umgreifen oder umschließen. Ferner kann die Verschlußnadel 60 bündig mit dem (nicht gezeigten) Spritzgußartikel abschließen oder eine Markierung darauf hinterlassen. Mit der Ausführungsform von Fig. 2 ist jedenfalls ein Austausch des Angußpunktes bei einem Verschleiß des Zentrierkörpers 80 jederzeit ohne Aufwand am Werkzeug möglich.

### Bezugszeichenliste

- α, β: Winkel
- A: Abstand
- D: Dichtsitz
- L: Längsachse
- V: Verbindungslinie

- 10: Nadelverschtußdüse
- 20: Düsenkörper
- 22: Luftkammer
- 30: Schmelzekanal

- 40: Düsenmundstück
- 41: Stirnfläche
- 44: Austrittsöffnung
- 46: Einlaufkonus

- 50: Formeinsatz
- 51: Angußöffnung

- 54: Zentriersitz
- 55: oberer Abschnitt (Zentriersitz)
- 57: oberer Bereich (Dichtsitz)

- 60: Verschlußnadel
- 64: Nadelabschnitt
- 66: Vertiefung
- 70: Verschlußteil
- 72: Dichtkante
- 74: Anlaufkante

- 80: Zentrierkörper
- 81: Flanschrand
- 82: Halsabschnitt
- 83: Führungsabschnitt
- 84: Endabschnitt
- 85: Stirnfläche
- 86: Konus

## Patentansprüche

1. Nadelverschlussdüse (10) für ein Spritzgießwerkzeug zum Herstellen von Spritzgießartikeln, mit einem Düsenkörper (20), in dem wenigstens ein Schmelzekanal (30) für eine Schmelze ausgebildet ist, der an oder in einem Düsenmundstück (40) endet und mit einer von wenigstens einem Formeinsatz (50) gebildeten Formkavität des Spritzgießwerkzeugs strömungsverbunden ist, und mit einer Verschlussnadel (60). die den Schmelzekanal (30) und das Düsenmundstück (40) längsverschieblich durchsetzt und von einer Öffnungs- in eine Schließstellung bringbar ist, wobei die Verschlussnadel (60) an ihrem unteren Ende einen Verschlussteil (70) hat oder bildet, der in Schließstellung in einen Dichtsitz (D) eingreift, und wobei zur Zentrierung der Verschlussnadel (60) vor dem Dichtsitz (D) wenigstens ein Einlaufkonus (46) vorgesehen ist, wobei das Düsenmundstück (40) aus einem hoch wärmeleitfähigen Material besteht und den Schmelzekanal (30) im wesentlichen zylindrisch fortsetzt, und wobei der bzw. jeder Einlaufkonus (46) für die Verschlussnadel (60) in einem Zentrierkörper (80) aus verschleißfestem Material ausgebildet ist, der an und/oder in dem Düsenmundstück (40) formschlüssig gehaltert ist und mit einem eine Austrittsöffnung (44) für die Schmelze bildenden Endabschnitt (84) mit dem Formeinsatz (50) in Eingriff bringbar ist, **dadurch gekennzeichnet**,
■ dass der Zentrierkörper (80) konzentrisch zur Längsachse (L) der Nadelverschlussdüse (10) ausgebildet ist und sich stirnseitig mit einem Flanschrand (81) an dem Düsenmundstück (40) abstützt, und
■ dass der Zentrierkörper (80) längsverschieblich in dem Düsenmundstück (40) sitzt und einen zylindrischen Halsabschnitt (82) aufweist, in dessen Bereich der Einlaufkonus (46) für die Verschlussnadel (60) ausgebildet ist. wobei der Halsabschnitt (82) von unten in das Düsenmundstück (40) eingesetzt und längsverschieblich darin geführt ist.

2. Nadelverschlussdüse nach Anspruch 1, **dadurch gekennzeichnet, dass** der Zentrierkörper (80) mit seinem Endabschnitt (84) in einen zylindrischen oder konischen Sitz (54) im Formeinsatz (50) eingreift.

3. Nadelverschlussdüse nach Anspruch 2, **dadurch gekennzeichnet, dass** der Endabschnitt (84) des Zentrierkörpers (80) längsverschieblich in den Sitz (54) eingreift.

4. Nadelverschlussdüse nach einem der Ansprüche 1 bis 3, **dadurch gekennzeichnet, dass** der Dichtsitz (D) für den Verschlussteil (70) der Verschlussnadel (60) in dem Formeinsatz (50) ausgebildet ist.

5. Nadelverschlussdüse nach einem der Ansprüche 1 bis 3, **dadurch gekennzeichnet, dass** der Dichtsitz (D) für den Verschlussteil (70) der Verschlussnadel (60) im Endabschnitt (84) des Zentrierkörpers (80) ausgebildet ist.

6. Nadelverschlussdüse nach Anspruch 5, **dadurch gekennzeichnet, dass** der Zentrierkörper (80) mit seinem Endabschnitt (84) einen Teil der Formkavität begrenzt.

7. Nadelverschlussdüse nach einem der Ansprüche 1 bis 6, **dadurch gekennzeichnet, dass** die Verschlussnadel (60) zum Verschlussteil (70) hin verjüngt ausgebildet ist.

8. Nadelverschlussdüse nach Anspruch 7, **dadurch gekennzeichnet, dass** der Übergang von dem im Durchmesser größeren Nadelabschnitt (64) zu dem im Durchmesser kleineren Verschlussteil (70) konisch und/oder gerundet verläuft.

9. Nadelverschlussdüse nach Anspruch 8, **dadurch gekennzeichnet, dass** zwischen dem Nadelabschnitt (64) und dem Verschlussteil (70) eine Anlaufkante (74) ausgebildet ist, deren Durchmesser größer ist als der Durchmesser der endseitigen Dichtkante (72) des Verschlussteils (70) der Verschlussnadel (60).

10. Nadelverschlussdüse nach Anspruch 9, **dadurch gekennzeichnet, dass** der axiale Abstand (A) zwischen der Dichtkante (72) des Verschlussteils (70) und der Anlaufkante (74) so gewählt ist, dass der Winkel (α) einer Verbindungslinie (V) von der Dichtkante (72) zur Anlaufkante (74) durch auf parallelen Durchmessern liegenden Verbindungspunkten größer ist als der Winkel (β) des Einlaufkonus (46) in dem Zentrierkörper (80), jeweils bezogen auf die Längsachse (L) der Nadelverschlussdüse (10).

11. Nadelverschlussdüse nach Anspruch 10, **dadurch gekennzeichnet, dass** die Differenz zwischen dem Winkel (α) und dem Winkel (β) größer ist als der größtmöglich erreichbare Auslenkwinkel der Verschlussnadel (60) zur Längsachse (L) der Nadelverschlussdüse (10) bevor die Verschlussnadel (60) mit der Anlaufkante (74) an die Innenwandung des Zentrierkörpers (80) anstößt.

12. Nadelverschlussdüse nach einem der Ansprüche 9 bis 11, **dadurch gekennzeichnet, dass** die Anlaufkante (74) gerundet ist.

13. Nadelverschlussdüse nach einem der Ansprüche 1 bis 12, **dadurch gekennzeichnet, dass** der Einlaufkonus (46) von Rippen, Axialstegen o.dgl. gebildet ist, welche die Verschlussnadel (60) konzentrisch gleitbar umschließen.

14. Nadelverschlussdüse nach einem der Ansprüche 1 bis 13, **dadurch gekennzeichnet, dass** die Verschlussnadel (60) seitliche Auswölbungen, Abflachungen, Vertiefungen (66) o.dgl. aufweist.

## Claims

1. Needle shut-off nozzle (10) for an injection moulding tool to manufacture injection-moulded products, with a nozzle body (20) in which is formed at least one melt channel (30) for a melting and that ends at or in an orifice land (40) and is flow-connected to an injection moulding tool mould cavity formed by at least one mould insert (50), and with a shut-off needle (60) that longitudinally moveably passes through the melt channel (30) and the orifice land (40) and is settable from an opening to an off position, and with the shut-off needle (60) having or forming at its lower end a locking dog (70) that in off position catches in a sealing seat (D) and with at least one inflow cone (46) being provided for to centre the shut-off needle (60) before the sealing seat (D), with the orifice land (40) consisting of a material of high thermal conductivity and continuing the melt channel (30) generally cylindrically, and with the or each inflow cone (46) for the shut-off needle (60) being formed in a centring body (80) of abrasionproof material that is positively held at and/or in the orifice land (40), and interlockable with the mould insert (50) by an end section (84) forming an outlet (44) for the melting, **characterized in that**
• the centring body (80) is formed concentrically to the longitudinal axis (L) of the needle shut-off nozzle (10) and with a flange edge (81) at its front stays on the orifice land (40), and
• that the centring body (80) is seated longitudinally moveable in the orifice land (40) and has a cylindrical neck section (82) in the range of which the inflow cone (46) for the shut-off needle (60) is formed, with such neck section (82) being inserted from below into the orifice land (40) and longitudinally moveably guided therein.

2. Needle shut-off nozzle according to Claim 1, **characterized in that** with its end section (84) the centring body (80) interlocks with a cylindrical or conical seat (54) in the mould insert (50).

3. Needle shut-off nozzle according to Claim 2, **characterized in that** the end section (84) of the centring body (80) interlocks longitudinally moveably with the seat (54).

4. Needle shut-off nozzle according to one of the Claims 1 to 3, **characterized in that** the sealing seat (D) for the locking dog (70) of the shut-off needle (60) is formed in the mould insert (50).

5. Needle shut-off nozzle according to one of the Claims 1 to 4, **characterized in that** the sealing seat (D) for the locking dog (70) of the shut-off needle (60) is formed in the end section (84) of the centring body (80).

6. Needle shut-off nozzle according to Claim 5, **characterized in that** the centring body (80) limits with its end section (84) a part of the mould cavity.

7. Needle shut-off nozzle according to one of the Claims 1 to 6, **characterized in that** the shut-off needle (60) is drafting towards the locking dog (70).

8. Needle shut-off nozzle according to Claim 7, **characterized in that** the transition from the larger diameter of the needle section (64) to the smaller diameter of the locking dog (70) runs conically and/or rounded.

9. Needle shut-off nozzle according to Claim 8, **characterized in that** between the needle section (64) and the locking dog (70) a stopping edge (74) is formed of a diameter larger than the diameter of the end-sided sealing edge (72) of the locking dog (70) of the shut-off needle (60).

10. Needle shut-off nozzle according to Claim 9, **characterized in that** the axial distance (A) between the sealing edge (72) of the locking dog (70) and the stopping edge (74) is chosen such that the angle (α) of a tie line (V) from the sealing edge (72) to the stopping edge (74) through connecting points on diameters in parallel is larger than the angle (β) of the inflow cone (46) in the centring body (80), each related to the longitudinal axis (L) of the needle shut-off nozzle (10).

11. Needle shut-off nozzle according to Claim 10, **characterized in that** the difference between the angle (α) and the angle (β) is larger than the largest possible excursion angle of the shut-off needle (60) to the longitudinal axis (L) of the needle shut-off nozzle (10) before the shut-off needle (60) pushes with its stopping edge (74) against the inner wall of the centring body (80).

12. Needle shut-off nozzle according to one of the Claims 9 to 11, **characterized in that** the stopping edge (74) is rounded.

13. Needle shut-off nozzle according to one of the Claims 1 to 12, **characterized in that** the inflow cone (46) is formed of webs, axial ribs, or similar that encompass the shut-off needle (60) concentrically slidable.

14. Needle shut-off nozzle according to one of the Claims 1 to 13, **characterized in that** the shut-off needle (60) has lateral convexities, flattenings, recesses (66), or similar.

## Revendications

1. Buse à obturation d'aiguille (10) pour un outil moulage par injection pour produire des pièces moulées par injection avec un corps de buse (20) dans lequel est formé au moins une passage de fonte (30) pour une fonte, et qui se termine à ou dans un nez de buse (40) et est connectée par passage à une cavité de moule de l'outil de moulage par injection qui est formée au moins d'une insertion (50), et avec une aiguille à obturation (60) qui passe de manière longitudinalement amovible le passage de fonte (30) et le nez de buse (40) et qui est réglable d'une position d'ouverture à une position de fermeture, ladite aiguille à obturation (60) ayant ou formant à son pied un obturateur (70) qui en position de fermeture s'engrène dans un logement d'étanchéité (D), et avec au moins un cône d'entrée (46) ayant prévu pour centrer l'aiguille à obturation (60) avant le logement d'entrée (D), et avec le nez de buse (40) consistant d'une matière de haute conductibilité thermique et continuant le passage de fonte (30) de manière généralement cylindrique, et avec le ou chaque cône d'entrée (46) pour l'aiguille à obturation (60) est formé dans un corps de centrage (80) d'un matériel anti-usure qui est fixé à engagement positif à ou dans le nez de buse (40) et s'engrène dans l'insertion (50) par une section de bout (84) formant une sortie (44) pour la fonte, **caractérisée en ce que**
• le corps de centrage (80) est formé de manière concentrique à l'axe longitudinal (L) de la buse à obturation d'aiguille (10) et avec un bord de bride (81) à son front s'appuie au nez de buse (40), et
• que le corps de centrage (80) est logé de manière longitudinalement amovible dans le nez de buse (40) et a une section de cou cylindrique (82) dans la zone duquel le cône d'entrée (46) pour l'aiguille à obturation (60) est formé, ladite section de cou (82) étant insérée par de bas dans le nez de buse (40) et guidée là-dedans de manière longitudinalement amovible.

2. Buse à obturation d'aiguille selon la Revendication 1, **caractérisée en ce que** le corps de centrage (80) s'engrène avec sa section de bout (84) dans un logement cylindrique ou conique (54) dans l'insert (50).

3. Buse à obturation d'aiguille selon la Revendication 2, **caractérisée en ce que** la section de bout (84) du corps de centrage (80) s'engrène de manière longitudinalement amovible dans le logement (54).

4. Buse à obturation d'aiguille selon une des Revendications 1 à 3, **caractérisée en ce que** le logement d'étanchéité (D) pour l'obturateur (70) de l'aiguille à obturation (60) est formé dans l'insertion (50).

5. Buse à obturation d'aiguille selon une des Revendications 1 à 4, **caractérisée en ce que** le logement d'étanchéité (D) pour l'obturateur (70) de l'aiguille à obturation (60) est formé dans la section de bout (84) du corps de centrage (80).

6. Buse à obturation d'aiguille selon la Revendication 5, **caractérisée en ce que** le corps de centrage (80) limite avec sa section de bout (84) une partie de la cavité de moule.

7. Buse à obturation d'aiguille selon une des Revendications 1 à 6, **caractérisée en ce que** l'aiguille à obturation (60) est formé de manière qu'elle se réduit vers l'obturateur (70).

8. Buse à obturation d'aiguille selon la Revendication 7, **caractérisée en ce que** la transition de la section d'aiguille (64) d'un plus grand diamètre à l'obturateur (70) d'un diamètre réduit évolue de manière conique et/ou arrondie.

9. Buse à obturation d'aiguille selon la Revendication 8, **caractérisée en ce que** entre la section d'aiguille (64) et l'obturateur (70) est formé un bord d'arrêt (74) dont le diamètre est plus grand que le diamètre du bord d'étanchement (72) au bout de l'obturateur (70) de l'aiguille à obturation (60).

10. Buse à obturation d'aiguille selon la Revendication 9, **caractérisée en ce que** la distance axiale (A) entre le bord d'étanchéité (72) de l'obturateur (70) et le bord d'arrêt (74) est choisie tel que l'angle (α) d'une ligne de jonction (V) du bord d'étanchéité (72) au bord d'arrêt (74) par des points de jonction sur des diamètres en parallèle est plus grand que l'angle (β) du cône d'entrée (46) dans le corps de centrage (80), chacun en relation à l'axe longitudinale (L) de la buse à obturation d'aiguille (10).

11. Buse à obturation d'aiguille selon la Revendication 10, **caractérisée en ce que** la différence entre l'angle (α) et l'angle (β) est plus grande que le plus grand possible angle d'excursion de l'aiguille à obturation (60) à l'axe longitudinale (L) de la buse à obturation d'aiguille (10) avant que l'aiguille à obturation (60) pousse avec son bord d'arrêt (74) sur le paroi intérieur du corps de centrage (80).

12. Buse à obturation d'aiguille selon une des Revendications 9 à 11, **caractérisée en ce que** le bord d'arrêt (74) est arrondi.

13. Buse à obturation d'aiguille selon une des Revendications 1 à 12, **caractérisée en ce que** le cône d'entrée (46) est formé des nervures, des nervures axiales, ou pareil, qui enferment l'aiguille à obturation (60) de manière concentriquement amovible.

14. Buse à obturation d'aiguille selon une des Revendications 1 à 13, **caractérisée en ce que** l'aiguille à obturation (60) a des convexités, aplatissements, cavités (66), ou pareil.
